(19) Europäisches Patentamt
European Patent Office
Office européen des brevets

(11) **EP 4 209 991 A1**

(12) **EUROPEAN PATENT APPLICATION**
published in accordance with Art. 153(4) EPC

(43) Date of publication:
**12.07.2023 Bulletin 2023/28**

(21) Application number: **20952403.2**

(22) Date of filing: **02.09.2020**

(51) International Patent Classification (IPC):
**G06T 7/00** (2017.01)     **G01N 33/48** (2006.01)

(52) Cooperative Patent Classification (CPC):
**G01N 33/48; G06T 7/00**

(86) International application number:
**PCT/JP2020/033222**

(87) International publication number:
**WO 2022/049663 (10.03.2022 Gazette 2022/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Evident Corporation**
**Nagano 399-0495 (JP)**

(72) Inventor: **OSAWA Kenro**
**Nagano 399-0495 (JP)**

(74) Representative: **Gunzelmann, Rainer**
**Wuesthoff & Wuesthoff**
**Patentanwälte PartG mbB**
**Schweigerstraße 2**
**81541 München (DE)**

(54) **PROGRAM, INFORMATION STORAGE MEDIUM, AND PROCESSING SYSTEM**

(57)     A program causes a computer to execute an input step(S1) of inputting input information; an output step (S3) of outputting, based on the input information, classification information. The input information is a pathological image that includes tissue and non-tissue other than the tissue or information obtained by processing the pathological image. The classification information indicates whether or not the tissue in each local region of the pathological image is abnormal. In the output step (S3), processing is performed in which, for the tissue in a near-edge region constituted by the tissue at a distance from the non-tissue equal to or less than a threshold value, the number of instances of an abnormal classification is smaller than when processing to classify the tissue in the near-edge region is performed according to the same predetermined criterion as the tissue other than the tissue in the near-edge region, and the classification information is outputted.

FIG. 10

**Description**

TECHNICAL FIELD

The present embodiment relates to a program, an information storage medium, a processing system, and the like.

BACKGROUND

An image analysis technology is known in which an image is analyzed in each local region, and classification into categories such as abnormal or normal is performed for each of the local regions. Non-Patent Document 1 discloses a technology for photographing a pathological tissue specimen as a subject, determining whether or not a partial image of a local region contains cancer, and determining, on the basis of the determination result for each local region, whether or not the entire image includes an abnormality. As one such method for analyzing local regions, a neural network that performs region segmentation by category, as per Non-Patent Document 2, can also be used. The neural network is made to learn to perform classification, for each local region, into an abnormal category and another category, and thus the neural network is capable of extracting an abnormal local region.

CITATION LIST

Non-Patent Document

Non-Patent Document 1: Technical Report 117(48), 1-6, May 25, 2017, The Institute of Electronics, Information and Communication Engineers "Diagnosis of breast cancer from pathological tissue image using deep learning"
Non-Patent Document 2: arXiv:1412.7062v4 [cs.CV], 7 Jun 2016, "SEMANTIC IMAGE SEGMENTATION WITH DEEP CONVOLUTIONAL NETS AND FULLY CONNECTED CRFS"

SUMMARY OF THE INVENTION

PROBLEM TO BE SOLVED BY THE INVENTION

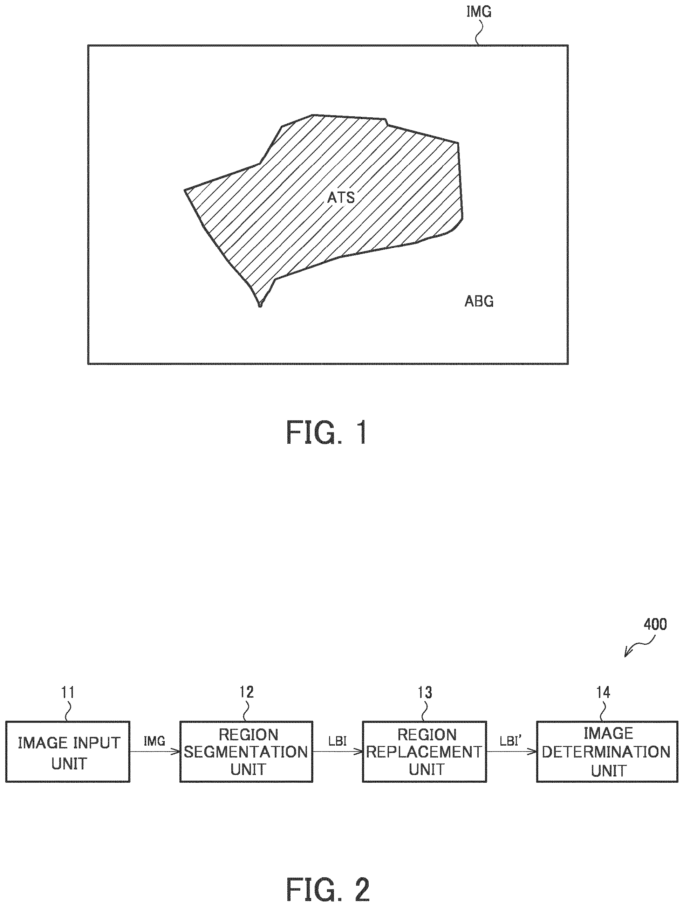

A pathological tissue specimen is a specimen obtained by placing, on a glass slide, a section of biological tissue collected in a biopsy using an endoscope or in ablation through surgery, or the like. An image obtained by photographing the pathological tissue specimen is referred to as a pathological image. As shown in FIG. 1, there is a tissue region ATS in a portion of the pathological image IMG, and the periphery of the tissue region is a non-tissue background region ABG. Specifically, the background region ABG is a region of only a transparent glass slide.

In analysis of the pathological image IMG, a cell shape-related feature is an important feature for determining whether the tissue is normal or abnormal. However, near the edge of the tissue region ATS, the structure may be broken by tearing of cells in a biopsy or specimen preparation, or the cells may be stretched and deformed. Therefore, there is a problem in that, near the edge of the tissue region ATS, it is sometimes not possible to obtain analysis results of the same quality as that for the other regions.

MEANS TO SOLVE THE PROBLEM

An aspect of the present disclosure relates to a program causing a computer to execute: an input step of inputting input information which is a pathological image that includes tissue and non-tissue other than the tissue or which is processing information obtained by processing the pathological image; and an output step of outputting, based on the input information, classification information indicating whether or not the tissue in each local region of the pathological image is abnormal, wherein, in the output step, second processing is performed in which, for the tissue in a near-edge region constituted by the tissue at a distance from the non-tissue equal to or less than a threshold value, the number of instances of an abnormal classification is smaller than when first processing to classify the tissue in the near-edge region is performed according to the same predetermined criterion as the tissue other than the tissue in the near-edge region, and the classification information is outputted.

Another aspect of the present disclosure relates to a program causing a computer to execute: an input step of inputting processing information obtained by processing a pathological image that includes tissue and non-tissue other than the tissue; and a determination step of determining, based on the processing information, whether or not the pathological image includes cancer tissue, wherein the processing information is information indicating whether or not the tissue in each local region of the pathological image is abnormal and includes information indicating that the tissue in a near-edge region constituted by the tissue at a distance from the non-tissue equal to or less than a threshold value is abnormal, and, in the determination step, the determination is made without using information, in the processing information, indicating that the tissue in the near-edge region is abnormal.

Yet another aspect of the present disclosure relates to a program causing a computer to execute: an input step of inputting a pathological image that includes tissue and non-tissue other than the tissue; and a determination step of determining whether or not the pathological image includes cancer tissue, wherein, in the determination step, the determination is made based on a result of processing using a learned model, the learned model is a learned model of a neural network learned by first learning or second learning by using a pathological image for learning and classification information for learning corresponding to the pathological image for learning, the first learning is learning using the classification information for learning that does not include information indicating that the tissue in a near-edge region constituted by the tissue at a distance from the non-tissue equal to or less than a threshold value is abnormal, and the second learning is learning using the classification information for learning that includes information indicating that the tissue in the near-edge region is abnormal, and is learning including processing that does not use information, in the classification information for learning, indicating that the tissue in the near-edge region is abnormal.

Yet another aspect of the present disclosure relates to a neural network learning program causing a computer to execute: a learning input step of inputting a pathological image for learning including tissue and non-tissue other than the tissue and classification information for learning corresponding to the pathological image for learning; and a learning step of learning, by first learning or second learning, a model of a neural network that generates classification information indicating whether or not the tissue in each local region of the pathological image for learning is abnormal, wherein, in a case where the learning is learning by the first learning, the first learning is learning using the classification information for learning that does not include information indicating that the tissue in a near-edge region constituted by the tissue at a distance from the non-tissue equal to or less than a threshold value is abnormal, in the learning input step, training data is inputted, and the program further causes the computer to execute: a learning extraction step of extracting the near-edge region; and a learning output step of generating, from the training data, the classification information for learning that does not include information indicating that the tissue in the extracted near-edge region is abnormal, or, in a case where, in the learning step, learning is by the second learning, the second learning is learning using the classification information for learning that includes information indicating that the tissue in the near-edge region is abnormal, and in the learning step, learning is performed without using information, in the classification information for learning, indicating that the tissue in the near-edge region is abnormal.

Yet another aspect of the present disclosure relates to an information storage medium storing the program according to any of the foregoing descriptions.

Yet another aspect of the present disclosure relates to a processing system including a processor that executes the program according to any of the foregoing descriptions.

BRIEF DESCRIPTION OF DRAWINGS

FIG. 1 is an explanatory diagram of a pathological image;
FIG. 2 is a configuration example of a processing system according to a first embodiment;
FIG. 3 is an example of a region-segmented image;
FIG. 4 is an example of a labeled image of training data;
FIG. 5 is a detailed configuration example of a region replacement unit;
FIG. 6 is an image obtained by enlarging a portion of a region-segmented image;
FIG. 7 is an example of a near-edge region;
FIG. 8 is an example of a region-segmented image obtained through replacement using a region-segmented image and a near-edge region;
FIG. 9 is an example of a cavity region;
FIG. 10 is a first flowchart of a processing procedure executed by the processing system;
FIG. 11 is a configuration example of a processing system according to a second embodiment;
FIG. 12 is a detailed configuration example of a probability distribution replacement unit;
FIG. 13 is an explanatory diagram of the operation of the probability distribution replacement unit;
FIG. 14 is a configuration example of a processing system according to a third embodiment;
FIG. 15 is a detailed configuration example of a neural network learning unit;
FIG. 16 is a second flowchart of a processing procedure executed by the processing system;
FIG. 17 is a configuration example of a processing system according to a fourth embodiment;

FIG. 18 is a third flowchart of a processing procedure executed by the processing system;

FIG. 19 is a configuration example of a processing system according to a sixth embodiment;

FIG. 20 is a detailed configuration example of a neural network learning unit;

FIG. 21 is a fourth flowchart of a processing procedure executed by the processing system;

FIG. 22 is a hardware configuration example of the processing system and a photographic system 800;

FIG. 23 is a hardware configuration example of a processing system and a learning system in a case where a neural network is to be learned outside the processing system; and

FIG. 24 is a hardware configuration example of a processing system in a case where a neural network is to be learned inside the processing system.

DESCRIPTION OF EMBODIMENTS

The present embodiment will be described hereinbelow. Note that the present embodiment described hereinbelow does not unreasonably limit the content disclosed in the claims. Moreover, not all the configurations described in the present embodiment are necessarily essential constituent elements of the present disclosure.

1. First Embodiment

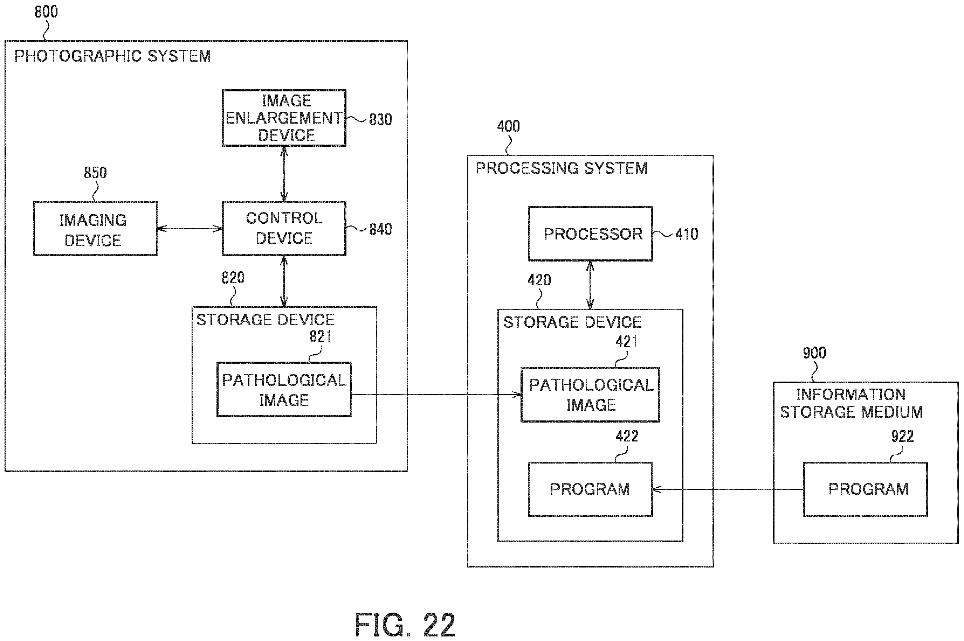

FIG. 2 shows a configuration example of a processing system 400 according to a first embodiment. The processing system 400 includes an image input unit 11, a region segmentation unit 12, a region replacement unit 13, and an image determination unit 14. Note that a detailed hardware configuration example of the processing system 400 will be described subsequently using FIG. 22 and so forth.

The image input unit 11 acquires digital image data of the pathological image IMG like that shown in FIG. 1. Specifically, the pathological image IMG is acquired by using an image enlargement device and an imaging device to enlarge and photograph the entire pathological tissue specimen. The digital image data of the pathological image IMG is stored in a storage device 420 of the processing system 400 shown in FIG. 22 and so forth, and the image input unit 11 acquires the digital image data by reading the digital image data of the pathological image IMG from the storage device 420.

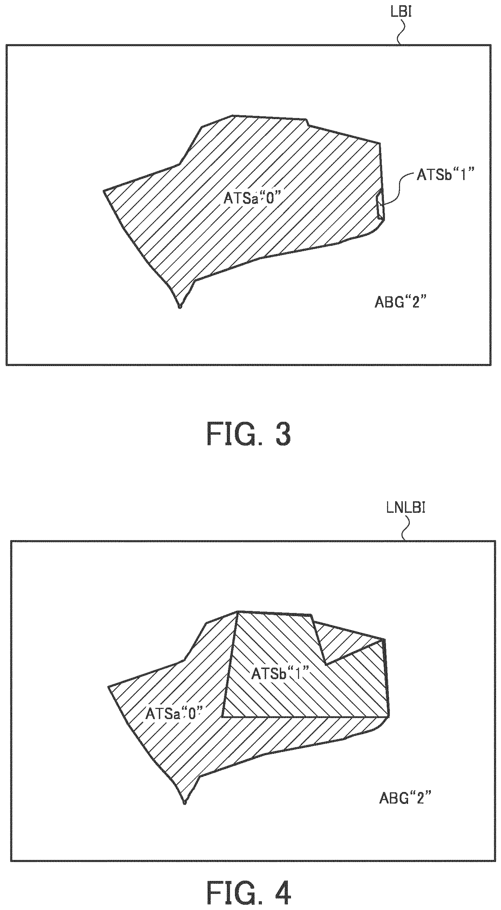

The region segmentation unit 12 generates a region-segmented image by classifying each local region of the inputted pathological image IMG into categories. FIG. 3 shows an example of a region-segmented image LBI. The region-segmented image LBI is image data obtained by assigning category information to each pixel. The pixels of the region-segmented image LBI each correspond to respective local regions of the pathological image IMG. A local region of the pathological image IMG is, for example, one pixel, but may also be a region of a plurality of adjacent pixels. The category information is information for identifying three categories of a normal tissue region, an abnormal tissue region, and a background region. For example, a normal tissue region ATSa is "0", an abnormal tissue region ATSb is "1", and a background region ABG is "2". In this case, the region-segmented image LBI is image data having any one of values 0, 1, and 2 in each pixel position. Furthermore, assuming that a region of "other categories" that does not belong to any of a normal tissue region, an abnormal tissue region, or a background region is "3", the region-segmented image LBI may be image data having values of 0, 1, 2, and 3 in each pixel position.

The region replacement unit 13 changes an abnormal tissue region ATSb in the near-edge region of the region-segmented image LBI to a normal tissue region ATSa, and outputs the result as a region-segmented image LBI'. The near-edge region is a tissue region near the boundary between the tissue region ATS and the background region ABG of the region-segmented image LBI inputted to the region replacement unit 13.

The image determination unit 14 determines, based on the region-segmented image LBI' inputted from the region replacement unit 13, whether the pathological image IMG includes an abnormal tissue region ATSb, and determines, based on the result, whether or not the pathological image IMG is an abnormal image or a normal image. The image determination unit 14 determines the pathological image IMG to be an abnormal image in a case where the region-segmented image LBI' includes an abnormal tissue region ATSb, and determines the pathological image IMG to be a normal image in a case where the region-segmented image LBI' does not include an abnormal tissue region ATSb.

The image input unit 11, the region segmentation unit 12, the region replacement unit 13, and the image determination unit 14 will be described in detail hereinbelow.

The pathological image IMG is an image obtained by enlarging and photographing the entire pathological tissue specimen through a microscope. For example, when photography is performed using a 40x objective lens, the range of the pathological tissue specimen that can be photographed is limited to a portion of the tissue region. Therefore, the entire region of the pathological tissue specimen is covered by moving the glass slide to change the photography position. Digital image data of the entire pathological tissue specimen as shown in FIG. 1 is obtained by pasting the images photographed in the respective photography positions to generate one piece of image data. Such a pathological image IMG is called a whole slide image, and is a color image of three channels, namely red (R), green (G), and blue (B), with a high pixel count.

The region segmentation unit 12 is a classification processing unit that classifies each of the local regions of the pathological image IMG into categories. The region segmentation unit 12 is, for example, a neural network that performs segmentation of the pathological image IMG, and an example of a neural network is disclosed in the above-described Non-Patent Documents 1 and 2. However, neural networks that can be adopted as the region segmentation unit 12 are not limited to those disclosed in Non-Patent Documents 1 and 2, and the region segmentation unit 12 may be a classification processing unit that is not a neural network. Non-Patent Document 1 discloses a technology in which a neural network outputs a category, for each local region, as either benign or malignant. Non-Patent Document 2 discloses a technology in which a neural network estimates a heat map that is a spatial probability distribution of categories, and after estimating the heat map, further estimates category information. Such a neural network is pre-learned, as training data, using a large number of sets of pathological images and region-segmented images corresponding to the pathological images. The region-segmented images used as training data are labeled images that are correct for learning. By performing such learning, the neural network is capable of estimating the region-segmented image LBI highly accurately when an unknown pathological image IMG not used for learning is inputted to the neural network.

FIG. 4 is an example of a labeled image LNLBI of training data. Similarly to the region-segmented image LBI estimated by the neural network, the labeled image LNLBI of the training data is information for identifying the three categories of a normal tissue region ATSa, an abnormal tissue region ATSb, and the background region ABG. For example, a normal tissue region is referred to as "0", an abnormal tissue region is referred to as "1", and the background region is referred to as "2". The labeled image LNLBI is image data having a value of 0, 1, or 2 for each pixel. Alternatively, another category "3" may also be added. Because the neural network is learned using such training data, the neural network is able to estimate the region-segmented image LBI shown in FIG. 3.

The region replacement unit 13 replaces category information of a near-edge region of the tissue region ATS among regions, of the region-segmented image LBI, estimated to be abnormal tissue regions ATSb, with category information of a normal tissue region ATSa, and outputs a post-replacement region-segmented image LBI' as the classification information. That is, in a case where a pixel contained in the near-edge region has the category information "1", the region replacement unit 13 replaces the category information with "0". Note that, in a case where the region-segmented image LBI has "another category", the region replacement unit 13 may replace the category information with "3" when a pixel contained in the near-edge region has the category information "1".

Note that an example in which the region replacement unit 13 replaces the pixels contained in the near-edge region of the region-segmented image LBI has been described; however, when the region segmentation unit 12 classifies each local region of the pathological image IMG into categories, category information of the pixels contained in the near-edge region may be classified as "0" or "3". In this case, the region replacement unit 13 is omitted, and the processing system 400 includes a near-edge region extraction unit. The near-edge region extraction unit extracts a near-edge region from the pathological image IMG, and the region segmentation unit 12 performs category classification by using the extracted near-edge region.

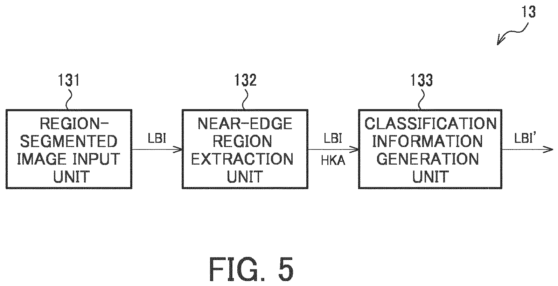

FIG. 5 is a detailed configuration example of a region replacement unit 13. The region replacement unit 13 includes a region-segmented image input unit 131, a near-edge region extraction unit 132, and a classification information generation unit 133.

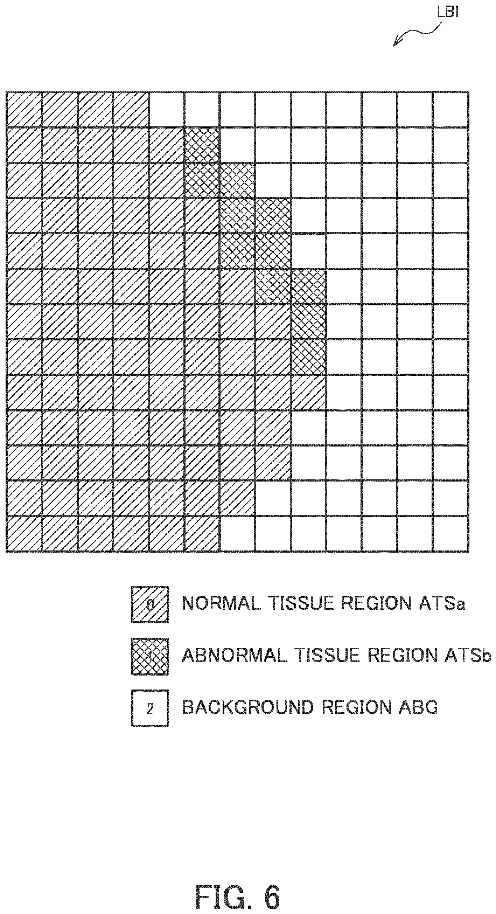

The region-segmented image input unit 131 inputs the region-segmented image LBI to the near-edge region extraction unit 132. FIG. 6 shows an image obtained by enlarging a portion of the region-segmented image LBI shown in FIG. 3. One rectangle indicates a pixel of the region-segmented image LBI, and 0, 1, or 2 is assigned to each pixel.

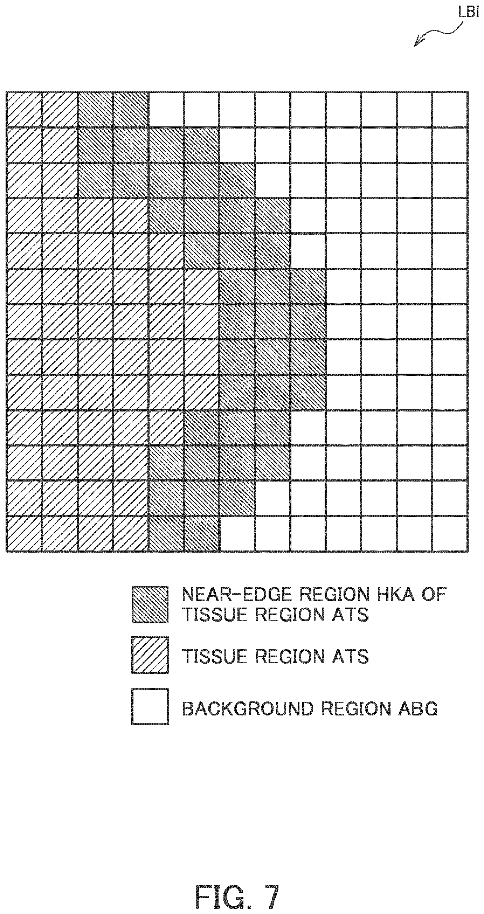

The near-edge region extraction unit 132 extracts a near-edge region of the tissue region ATS in the region-segmented image LBI. FIG. 7 shows an example of a near-edge region HKA. The data of the near-edge region HKA is, for example, data obtained by assigning a flag indicating that a region is a near-edge region HKA to pixels contained in the near-edge region HKA of the region-segmented image LBI, and by assigning a flag indicating that a region is not the near-edge region HKA to pixels not contained in the near-edge region HKA of the region-segmented image LBI. The near-edge region extraction unit 132 extracts, as a near-edge region HKA, a set of pixels for which the distance from the pixels of the background region ABG bordering the tissue region ATS is equal to or less than a predetermined distance D. The distance D is, for example, a Euclidean distance represented by the number of pixels in the region-segmented image LBI.

The method of extracting the near-edge region HKA is not limited to the above-described method, rather, the following simplified method may be used, for example. FIG. 7 shows an example in which the near-edge region HKA is extracted using the simplified method. Specifically, the near-edge region extraction unit 132 sets D as an integer of 1 or more, and in a case where a pixel of the tissue region ATS is contained in a rectangular region of $(2{\times}D+1)$ pixels $\times$ $(2{\times}D+1)$ pixels centered on a pixel of the background region ABG bordering the tissue region ATS, the pixel of the tissue region ATS is set as a pixel of the near-edge region HKA. FIG. 7 shows an example where D=2. In other words, when a pixel of the background region ABG is contained in a rectangular region of $(2{\times}D+1)$ pixels $\times$ $(2{\times}D+1)$ pixels centered on a pixel of the tissue region ATS, the near-edge region extraction unit 132 sets the pixel of the tissue region ATS as a pixel of the near-edge region HKA.

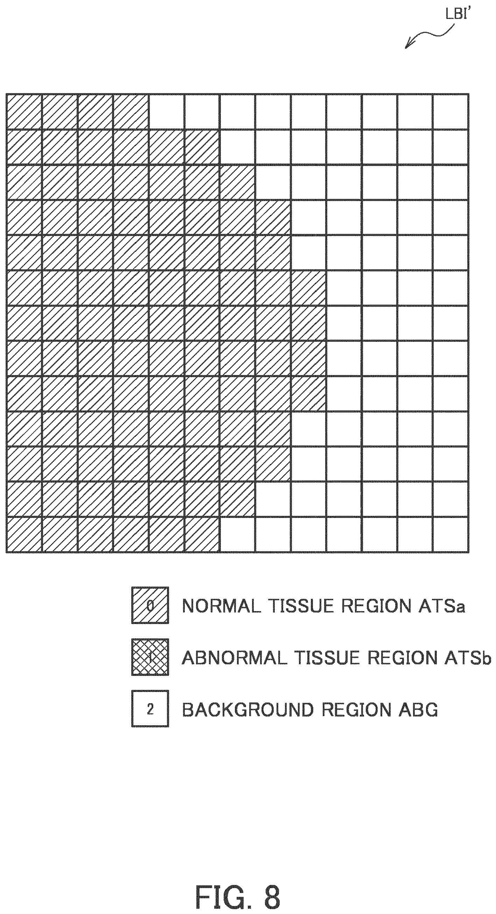

When a pixel contained in the near-edge region HKA has an abnormal tissue region category "1" in the region-segmented image LBI, the classification information generation unit 133 replaces the category of the pixel with a normal tissue region category "0" or another category "3". The classification information generation unit 133 does not replace the category of pixels of a normal tissue region having the category "0" or of pixels having the background region category "2". The classification information generation unit 133 outputs a post-replacement region-segmented image LBI' as classification information. FIG. 8 shows an example of a region-segmented image LBI' obtained through replacement using the region-segmented image LBI in FIG. 6 and the near-edge region HKA in FIG. 7. In FIGS. 6 and 7, because all the abnormal tissue regions ATSa belong to the near-edge region HKA, the classification information generation unit 133 replaces the category "1" of the abnormal tissue regions ATSb with the category "0" of a normal tissue region ATSa. Accordingly, all the category "1" instances of the abnormal tissue regions ATSb in FIG. 6 are replaced with a category "0" value of a normal tissue region ATSa.

The image determination unit 14 receives the region-segmented image LBI' from the classification information generation unit 133. The image determination unit 14 conducts a search for whether or not an abnormal tissue region is included in the region-segmented image LBI' constituting classification information, determines, based on the result, whether or not the pathological image IMG is an abnormal image, and outputs information of the determination result. That is, the image determination unit 14 conducts a search for whether or not a pixel having a category "1" exists in the region-segmented image LBI'. The image determination unit 14 determines that the pathological image IMG is an abnormal image in a case where a predetermined number or more of pixels having the category "1" exist in the region-segmented image LBI', and determines that the pathological image IMG is a normal image in a case where the number of pixels having the category "1" is less than the predetermined number. The predetermined number is a threshold value for the determination, and is, for example, one, but may also be two or more. In the example of FIG. 8, because there is no abnormal tissue region ATSb, the image determination unit 14 determines that the image is a normal image. If the pathological image IMG inputted to the processing system 400 is actually a normal image, even in a case where a pixel in the near-edge region is determined to be an abnormal tissue region, the abnormal tissue region is replaced with a normal tissue region. Accordingly, the processing system 400 is capable of correctly determining whether or not the pathological image IMG is a normal image.

As described above, the near-edge region extraction unit 132 uses the distance D when extracting a near-edge region. The method of setting the distance D will be described.

As the distance D is increased, the near-edge region of the tissue region increases in size. Therefore, the region replacement unit 13 replaces abnormal tissue regions in the near-edge region with normal tissue regions, thus reducing the abnormal tissue regions. As a result, the number of pathological images determined by the image determination unit 14 to be abnormal images is reduced. Therefore, although the ratio FPR of overdetection where a normal image is estimated to be an abnormal image decreases, there is an increase in the ratio FNR with which oversight, where an abnormal image is estimated to be a normal image, occurs. FPR stands for False Positive Rate, and FNR stands for False Negative Rate. The FPR and the FNR are adjusted by setting a parameter used by the region segmentation unit 12. The parameter is, for example, a threshold value when the category of each pixel in the region-segmented image is determined, from a heat map, to be abnormal. This threshold value is defined as T. In general, when either the FPR or the FNR is reduced, the other is increased in a trade-off relationship. The distance D and the threshold value T are simultaneously set so as to optimize the FPR and the FNR. For example, in a case where it is desirable to obtain a distance D so as to minimize the FPR under the condition FNR = 0, it is sufficient to calculate the FPR and the FNR in all combinations of the distance D and the threshold value T, and select, from the results for FNR = 0, the distance D and the threshold value T with which the FPR is minimized.

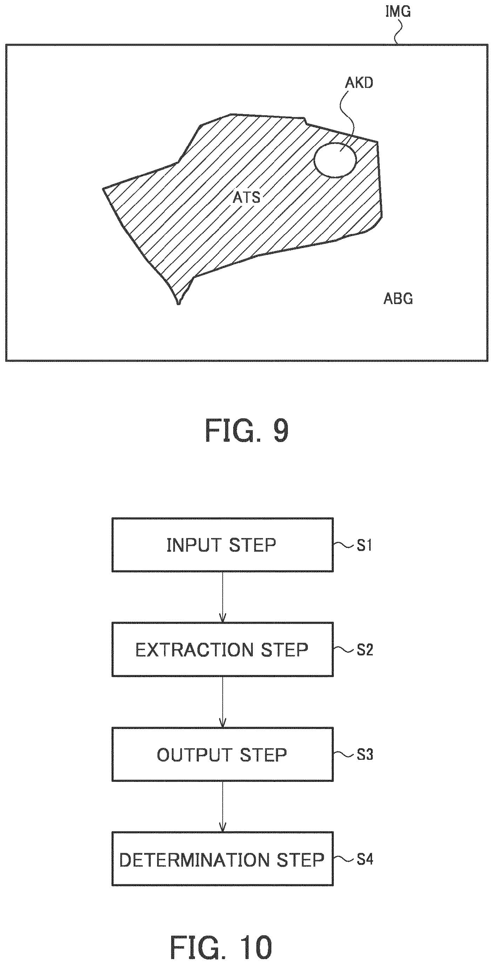

As shown in FIG. 9, a background region sometimes exists on the inside of the tissue region ATS, surrounded by the tissue region ATS. Such a background region is referred to as a cavity region AKD. For example, a cavity region AKD occurs in a case where a glandular duct in tissue is sliced and sampled. Such a near-edge region for a cavity region AKD is different from a near-edge region for a background region ABG not surrounded by tissue, and the cell structure is often maintained. That is, in a near-edge region for a cavity region AKD, it is less likely that cells tear apart and the structure is broken, or that the cells are stretched and deformed at the time of a biopsy or in a specimen preparation process. Therefore, in a near-edge region for a cavity region AKD, it is not necessary to replace pixels classified as abnormal tissue regions, with normal tissue regions.

Therefore, the near-edge region extraction unit 132 according to the present embodiment may identify a cavity region AKD in the region-segmented image LBI before extracting a near-edge region HKA in the tissue region ATS, and replace the category "2" of the pixels contained in the cavity region AKD with the category "0" of a normal tissue region ATSa. By adding such processing, the tissue region ATS around the cavity is not extracted as the near-edge region HKA because the cavity is regarded as the background. By defining a cavity region AKD in the region-segmented image LBI as a background category region surrounded by the tissue region ATS, the near-edge region extraction unit 132 is capable of easily identifying the cavity region AKD.

FIG. 10 is a first flowchart of a processing procedure executed by the processing system 400. As will be described subsequently using FIG. 22 and so forth, the processing procedure is scripted in a program. A computer is an information processing device or the like that realizes the processing system 400, and may include a processor, a storage device, a display device, an operation device, and a communication device.

The program causes a computer to execute an input step S1 and an output step S3. In input step S1, input information is inputted. The input information is a pathological image or processing information. The pathological image includes tissue and non-tissue other than the tissue. The processing information is information obtained by processing the pathological image. In output step S3, the classification information is outputted based on the input information. The classification information indicates whether or not the tissue in each local region of the pathological image is abnormal. In output step S3, processing is performed on the tissue in the near-edge region such that the number of instances of an abnormal classification is smaller than the number when processing to classify the tissue in the near-edge region is performed according to the same predetermined criterion as the tissue other than that of the near-edge region, and the classification information is outputted. This processing is processing in which the number of instances of an abnormal classification is reduced in the near-edge region in comparison with a case where the processing of output step S3 is not performed. The near-edge region is constituted by tissue at a distance from the non-tissue equal to or less than the threshold value.

According to the present embodiment, there is a reduced possibility that the tissue in the near-edge region is determined to be abnormal than when the near-edge region and the other regions are classified according to the same predetermined criterion. Therefore, even in a case where the cell structure is broken or cells are deformed in the near-edge region of the tissue region, the tissue in the near-edge region is less likely to be determined to be abnormal. Accordingly, it is possible to appropriately determine whether or not a pathological image is an abnormal image. For example, even for a pathological image in which an abnormality is likely to be overdetected in a near-edge region of the tissue region, it is possible to determine the normality/abnormality of the entire image highly accurately, based on the results of region segmentation.

Note that, in the first embodiment, the region-segmented image LBI corresponds to the processing information. In the first embodiment, the processed image is inputted to the near-edge region extraction unit 132 as the input information, but the pathological image IMG may also be inputted to the near-edge region extraction unit 132 as the input information. In that case, the near-edge region extraction unit 132 may extract the near-edge region HKA from the pathological image IMG based on, for example, brightness, color, pattern recognition, and so forth of the image. Furthermore, in the first embodiment, the predetermined criterion corresponds to a threshold value when the region segmentation unit 12 determines that the category of each pixel in the region-segmented image is abnormal. Further, in the first embodiment, the number of instances of an abnormal classification corresponds to the number of pixels classified into the abnormal category. That is, the number of pixels in the near-edge region classified into the abnormal category is smaller when the processing of output step S3 is performed on the near-edge region than the number of pixels in the near-edge region classified into the abnormal category when processing to perform classification, according to the same predetermined criterion as for regions other than the near-edge region, is performed on the near-edge region without performing the processing of output step S3.

The program also causes the computer to execute an extraction step S2 of extracting a near-edge region from the input information. In output step S3, the above-described processing is performed based on the extracted near-edge region.

According to the present embodiment, because the extraction step S2 extracts a near-edge region from the input information, the near-edge region can be automatically extracted through data processing by the computer.

In addition, the above processing includes processing to classify the tissue in the near-edge region as not being abnormal.

According to the present embodiment, even in a case where the cell structure is broken or cells are deformed in the near-edge region of the tissue region, classification information which does not include information indicating that the tissue in the near-edge region is abnormal is obtained. Accordingly, it is possible to appropriately determine whether or not a pathological image is an abnormal image.

In input step S1, the processing information is inputted as the input information. The processing information includes information indicating whether or not the tissue in each local region of the pathological image is abnormal and indicating that the tissue in the near-edge region is abnormal. In output step S3, classification information is generated by correcting the information, in the processing information, indicating whether or not the tissue in the near-edge region is abnormal.

According to the present embodiment, in output step S3, the processing information including information indicating that the tissue in the near-edge region is abnormal is corrected, and thus classification information which does not include information indicating that the tissue in the near-edge region is abnormal can be generated.

Note that, in the first embodiment, the region-segmented image LBI corresponds to the processing information. However, the region-segmented image LBI may sometimes include information indicating that the tissue in the near-edge region is abnormal or may sometimes not include information indicating that the tissue in the near-edge region is abnormal. Here, a case is considered where the region-segmented image LBI includes information indicating that the tissue in the near-edge region is abnormal.

In addition, in output step S3, classification information including only information indicating that the tissue in the near-edge region is normal is generated, or classification information including information not indicating that the tissue in the near-edge region is normal or abnormal is generated.

According to the present embodiment, in output step S3, information, in the processing information, indicating that the tissue in the near-edge region is abnormal is corrected to information indicating that the tissue in the near-edge region is normal or to information not indicating that the tissue in the near-edge region is normal or abnormal. Accordingly, in output step S3, classification information which does not include information indicating that the tissue in the near-edge region is abnormal can be generated.

Note that, in the first embodiment, the other category "3" corresponds to "information that does not indicate that the tissue in the near-edge region is normal or abnormal".

Further, in output step S3, the above-described processing is not performed on a near-edge region constituted by tissue at a distance, from the cavity region, equal to or less than a threshold value. The cavity region is a non-tissue region surrounded by tissue.

According to the present embodiment, in a case where there is an abnormal tissue region in a tissue region close to the boundary between the tissue and the cavity region, it is possible to appropriately determine, based on the classification result, whether or not the pathological image is an abnormal image. Because there is a reduced possibility of tissue being destroyed or deformed at the boundary between the tissue and the cavity region, it is possible to perform appropriate image analysis by excluding the region from the near-edge region.

The program also causes the computer to execute a determination step S4. In the determination step S4, it is determined whether or not the pathological image includes cancer tissue by using the outputted classification information.

According to the present embodiment, because, in the determination step S4, it is determined whether or not the pathological image includes cancer tissue, based on classification information that does not include information indicating that the tissue in the near-edge region is abnormal, and hence the normality/abnormality of the entire image can be determined highly accurately even for a pathological image in which abnormality is likely to be overdetected in the near-edge region of the tissue region.

Note that the above processing procedure may be carried out as a processing method that includes the above steps. The program causes a computer to execute the processing method. Steps which are described subsequently in the second to sixth embodiments may also be executed as a processing method that includes the steps.

2. Second Embodiment

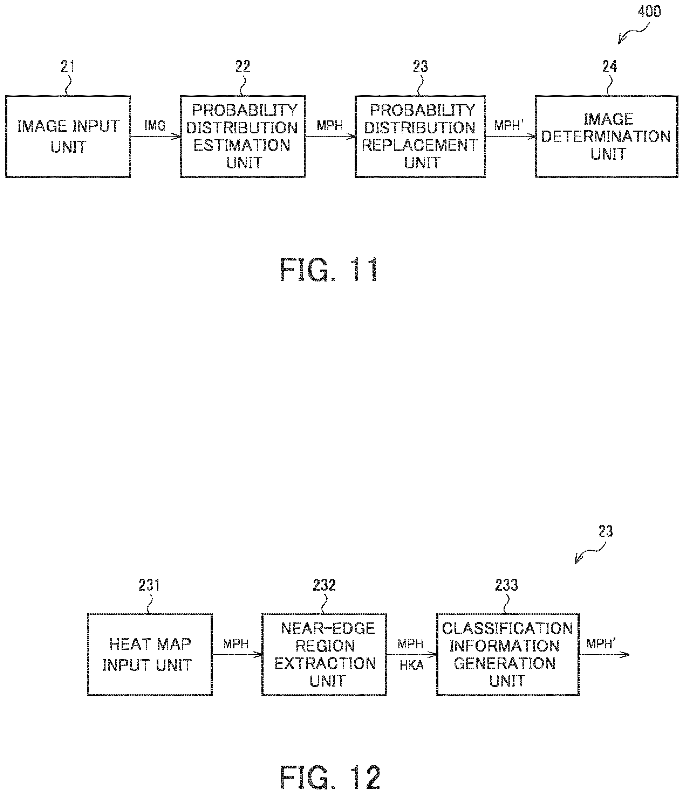

FIG. 11 is a configuration example of a processing system 400 according to a second embodiment. The processing system 400 includes an image input unit 21, a probability distribution estimation unit 22, a probability distribution replacement unit 23, and an image determination unit 24. Because the image input unit 21 is similar to the image input unit 11, a description thereof will be omitted.

The probability distribution estimation unit 22 estimates a heat map MPH from the inputted pathological image IMG. The heat map MPH is image data obtained by assigning, as a pixel value to each pixel, information regarding an estimated category probability. Each pixel in the heat map MPH corresponds to each local region of the pathological image IMG. A local region of the pathological image IMG is, for example, one pixel, but may also be a region of a plurality of adjacent pixels. The estimated category probabilities are three estimated probabilities, namely, the estimated probability of a normal tissue region, the estimated probability of an abnormal tissue region, and the estimated probability of a background region. The heat map MPH is generally calculated in the process of calculating the region-segmented image according to the first embodiment, and a neural network as disclosed in Non-Patent Document 2, for example, can be used to calculate the heat map MPH. However, the neural network that calculates the heat map MPH is not limited to that disclosed in Non-Patent Document 2.

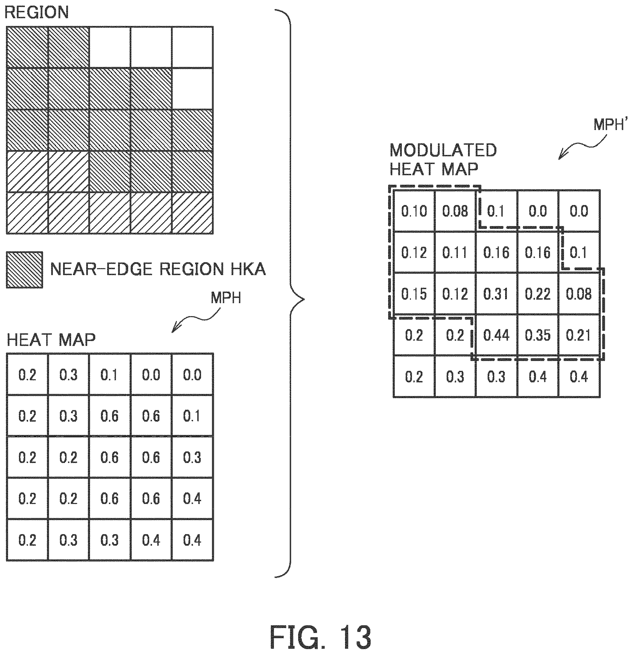

The probability distribution replacement unit 23 extracts a near-edge region of the tissue region from the heat map HMP and modulates the probability values of an abnormal tissue region of the heat map MPH in the near-edge region. FIG. 12 illustrates a detailed configuration example of the probability distribution replacement unit 23. The probability distribution replacement unit 23 includes a heat map input unit 231, a near-edge region extraction unit 232, and a classification information generation unit 233. Further, FIG. 13 shows an explanatory diagram of the operation of the probability distribution replacement unit 23.

The heat map input unit 231 inputs the heat map MPH generated by the probability distribution estimation unit 22 to the near-edge region extraction unit 232.

The near-edge region extraction unit 232 extracts the near-edge region HKA of tissue regions in the inputted heat map MPH. The near-edge region extraction unit 232 sets, as the background region, pixels for which the estimated probability value of the background region is higher than either the estimated probability value of a normal tissue region or the estimated probability value of an abnormal tissue region, and sets the other pixels as tissue regions. Here, tissue regions include abnormal tissue regions and normal tissue regions. The near-edge region extraction unit 232 extracts the near-edge region HKA by using a method similar to the method according to the first embodiment in which the near-edge region extraction unit 132 extracts the near-edge region HKA.

The classification information generation unit 233 modulates the estimated probability value of an abnormal tissue region by multiplying the estimated probability value of the abnormal tissue region by a weight W in the near-edge region HKA of the heat map MPH. The classification information generation unit 233 does not modulate the estimated probability value of a normal tissue region or the estimated probability value of the background region, and only modulates the estimated probability value of an abnormal tissue region. The weight of the estimated probability value $P(x)$ of the abnormal tissue region is $W(x)$. $x$ represents a two-dimensional coordinate position. $W(x)$ changes according to the distance $d(x)$ between $x$ and the coordinate position of the pixel in the background region, and specifically, the smaller the distance $d(x)$, the smaller the weight $W(x)$. As the distance $d(x)$, for example, the minimum distance among distances between the pixels in the coordinate position $x$ and the pixels in the background region may be adopted.

D is an integer of 1 or more. In a case where a pixel of a tissue region ATS is contained in a rectangular region of $(2 \times D + 1)$ pixels $\times (2 \times D + 1)$ pixels centered on a pixel $Q(x0)$ of the background region ABG, which borders the tissue region ATS, the pixel of the tissue region ATS is taken to be a pixel of the near-edge region HKA. At such time, the distance $d(x)$ is denoted by the following formula (1), for example, and the weight $W(x)$ of the pixels in the tissue region is denoted by the following formulas (2) and (3), for example.

$$d(x) = |x0-x| \quad ... \quad (1)$$

$$W(x) = d(x)/(\sqrt{2} \times D + 1) \text{ (where x is a pixel in near-edge region HKA) } ... \quad (2)$$

$$W(x) = 1 \text{ (where x is a pixel outside near-edge region HKA) } ... \quad (3)$$

FIG. 13 shows a modulation example for when the foregoing rectangular region in the case of D=2 is set as a near-edge region HKA. In FIG. 13, one rectangle indicates one pixel. FIG. 13 illustrates only the heat map MPH indicating the estimated probabilities of abnormal tissue regions. A probability value obtained by estimating the pixel to be an abnormal tissue region is assigned to each pixel in the heat map MPH. The probability values of the near-edge region HKA in the heat map MPH are modulated using the weight W, and thus a post-modulation heat map MPH' is generated. The probability values of the portion surrounded by the dotted line in the post-modulation heat map MPH' have been modulated. Note that the post-modulation heat map MPH' includes the probability values of a normal tissue region and the probability value of the background region, and these probability values are the same as the probability values in the heat map MPH.

The post-modulation heat map MPH' is inputted to the image determination unit 24. The image determination unit 24 conducts a search for whether or not a pixel exists for which the probability value of the category of an abnormal tissue region is larger than the probability values of the other categories in the post-modulation heat map MPH'. That is, in the post-modulation heat map MPH', the image determination unit 24 classifies a pixel for which the probability value of the category of an abnormal tissue region is larger than the probability values of the other categories as the category of an abnormal tissue region, and classifies the other pixels as a normal tissue region or the background region. In a case where there is even one pixel classified into the category of an abnormal tissue region, the image determination unit 14 outputs information that the pathological image IMG inputted to the processing system 400 is an abnormal image, and in a case where there is no such pixel, the image determination unit outputs information that the pathological image IMG inputted to the processing system 400 is a normal image.

The flowchart of the processing procedure executed by the processing system 400 according to the second embodiment is similar to that in FIG. 10. However, the content of output step S3 is different.

In input step S1, the processing information is inputted as the input information. In the second embodiment, the processing information is information of a spatial distribution of probabilities constituted by probability values indicating the degree of abnormality of the tissue in each local region of the pathological image. In output step S3, for the tissue in the near-edge region, processing is performed in which the number of instances of an abnormal classification is smaller than when processing to classify tissue in the near-edge region is performed according to the same predetermined criterion as the tissue other than that of the near-edge region. This processing is processing in which the number of instances of an abnormal classification is reduced in the near-edge region in comparison with a case where the processing of output step S3 is not performed. In addition, this processing includes processing to perform modulation by lowering the probability values of the near-edge region of the processing information.

According to the present embodiment, in output step S3, modulation is performed to reduce the probability values of the near-edge region of the processing information, and thus classification information can be generated for which the probability that the tissue in the near-edge region is classified into the abnormal category is lower than the probability that the tissue other than that of the near-edge region is classified into the abnormal category.

Note that, in the second embodiment, the post-modulation heat map MPH' corresponds to the classification information. As described above, the image determination unit 24 conducts a search for whether or not a pixel exists for which the probability value of the category of the abnormal tissue region is larger than the probability values of the other categories in the post-modulation heat map MPH'. At such time, because the probability value of the category of the abnormal tissue region in the near-edge region has been modulated, the number of pixels classified into the abnormal category in the near-edge region is smaller than that in a case where modulation has not been performed. That is, for the tissue in the near-edge region, the number of instances of an abnormal classification is smaller than when processing to classify tissue in the near-edge region is performed according to the same predetermined criterion as the tissue other than that of the near-edge region.

In addition, the above processing includes processing to perform modulation to lower the probability values of the local regions as the local regions have increased proximity to the non-tissue in the near-edge region.

According to the present embodiment, in output step S3, it is possible to generate classification information for which the probability indicating that the tissue in the near-edge region is abnormal becomes lower as the local regions have increased proximity to the non-tissue in the near-edge region. The closer to the edge of the tissue, the higher the possibility of the cell structure being broken or deformed; however, appropriate image analysis can be performed without being affected by the state of such cells.


3. Third Embodiment

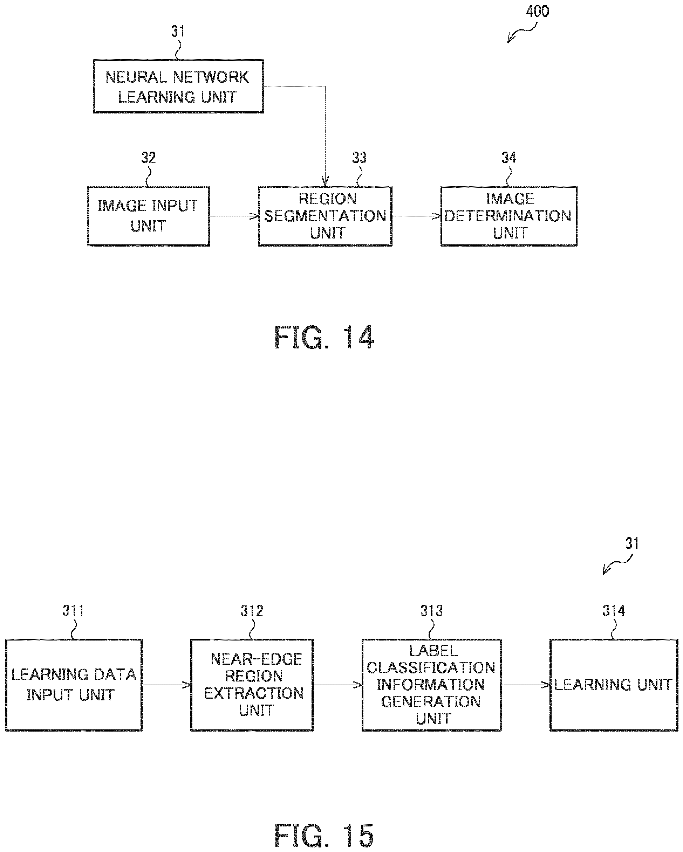

FIG. 14 shows a configuration example of a processing system 400 according to a third embodiment. The processing system 400 includes a neural network learning unit 31, an image input unit 32, a region segmentation unit 33, and an image determination unit 34. Because the image input unit 32, the region segmentation unit 33, and the image determination unit 34 are similar to the image input unit 11, the region segmentation unit 12, and the image determination unit 14 according to the first embodiment, respectively, descriptions thereof will be omitted.

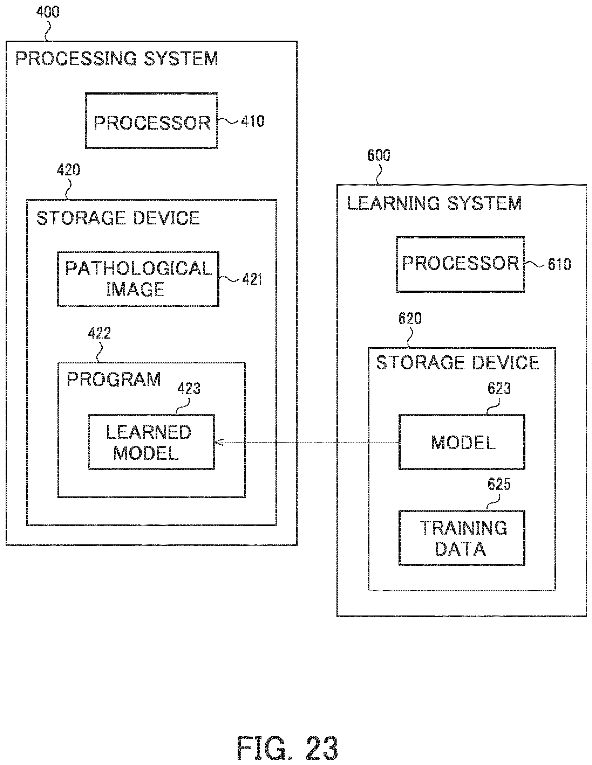

The neural network learning unit 31 causes the model of the neural network to learn, and the region segmentation unit 33 performs region segmentation using the learned model. The model includes an inference algorithm of the neural network and a parameter such as a weighting coefficient used for the inference algorithm. The learning parameter obtained through learning and the inference algorithm correspond to a learned model of the neural network. However, an inference algorithm is incorporated in the region segmentation unit 33 in advance, and a learning parameter is passed from the neural network learning unit 31 to the region segmentation unit 33. Note that, in FIG. 14, the processing system 400 includes the neural network learning unit 31, but the learning system 600 shown in FIG. 23 may include the neural network learning unit 31. In this case, the neural network learning unit 31 may be omitted from the processing system 400, or the neural network learning unit 31 may also be provided in the processing system 400.

FIG. 15 illustrates a detailed configuration example of the neural network learning unit 31. The neural network learning unit 31 includes a learning data input unit 311, a near-edge region extraction unit 312, a label classification information generation unit 313, and a learning unit 314.

The learning data input unit 311 inputs a large number of sets to the neural network learning unit 31, each set including a pathological image for learning the model of the neural network and a labeled image thereof. The sets are used as training data. A labeled image is image data in which category information is assigned to each pixel, similarly to the region-segmented image described in the first embodiment. A labeled image is created based on the corresponding pathological image by a pathologist having specialized knowledge of pathological diagnosis, for example.

The near-edge region extraction unit 312 extracts the near-edge region from the labeled image by using a method similar to the method in which the near-edge region extraction unit 132 according to the first embodiment extracts the near-edge region from the region-segmented image.

The label classification information generation unit 313 replaces the abnormal tissue region in the near-edge region of the labeled image with a normal tissue region or another region by using the same method as the method in which the classification information generation unit 133 according to the first embodiment changes the region-segmented image. That is, in a case where pixels contained in the near-edge region have the category information "1", the label classification information generation unit 313 replaces the category information with "0" or "3", and outputs a post-replacement labeled image as the label classification information.

A large number of sets of the pathological image and the corresponding label classification information are inputted to the learning unit 314. The pathological image inputted to the learning unit 314 is referred to as a pathological image for learning, and the label classification information is referred to as classification information for learning. Note that an example in which the neural network learning unit 31 generates the classification information for learning from the training data has been described here as pre-processing of the learning unit 314; however, pre-prepared classification information for learning may be inputted to the neural network learning unit 31 as training data. For example, the neural network learning unit 31 may generate the classification information for learning by an operator using image editing software or the like to replace the category of the near-edge region of a labeled image, without the near-edge region extraction unit 312 or the label classification information generation unit 313 being included. Alternatively, the neural network learning unit 31 may include the near-edge region extraction unit 312 but not include the label classification information generation unit 313, and the operator may use image editing software or the like to replace the category of the near-edge region of a labeled image and thus generate the classification information for learning, with the near-edge region extracted by the near-edge region extraction unit 312 serving as a reference.

The learning unit 314 learns the model of the neural network by using sets of a pathological image and label classification information. In the neural network learning, errors between estimated region-segmented images and label classification information are calculated and aggregated for each pixel. At such time, in a case where a pixel of "another category" is included in the label classification information, the pixel may be excluded from the error counting. By such processing, the model of the neural network is learned using label classification information that does not include an abnormal tissue region in the near-edge region of the tissue region.

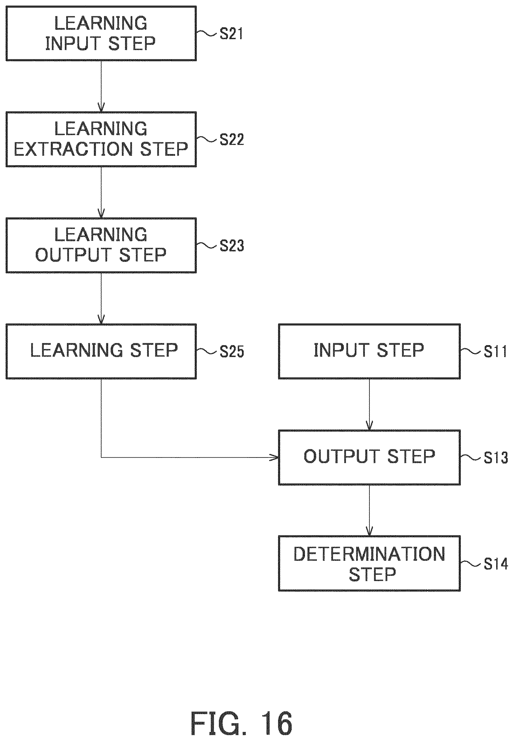

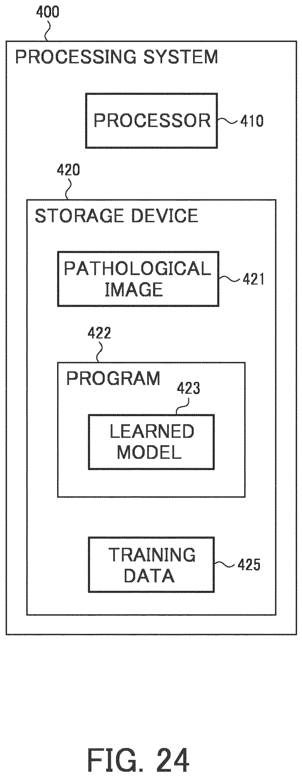

FIG. 16 is a second flowchart of a processing procedure executed by the processing system 400. The processing system 400 that executes this processing procedure will be described subsequently using FIGS. 23 and 24. Note that determination step S14 is similar to step S4 of FIG. 10.

In input step S11, the pathological image is inputted as input information. In output step S13, processing is performed, using the learned model, on the tissue in the near-edge region such that the number of instances of an abnormal classification is smaller than when processing to classify the tissue in the near-edge region is performed according to the same predetermined criterion as the tissue other than that of the near-edge region. The learned model is a learned model of the neural network which is learned by first learning by using a pathological image for learning and classification information for learning corresponding to the pathological image for learning. The first learning is learning that uses classification information for learning that does not include information indicating that the tissue in the near-edge region is abnormal. Note that, here, the learning processing of steps S21 to S23 and S25 may be executed by the learning system 600 in FIG. 23 or may be executed by the processing system 400 in FIG. 24.

According to the present embodiment, the neural network is learned by using the classification information for learning that does not include information indicating that the tissue in the near-edge region is abnormal. Accordingly, by generating classification information from a pathological image by processing using the learned model of the neural network, the number of instances where tissue in the near-edge region is classified into the abnormal category is smaller than the number of instances where tissue in regions other than the near-edge region is classified into the abnormal category. Accordingly, it is possible to perform appropriate image analysis regardless of the state of the cells in the near-edge region. For example, even for a pathological image in which an abnormality is likely to be overdetected in the near-edge region of a tissue region, overdetection can be made less likely to occur. Furthermore, because complicated processing by the near-edge region extraction unit and the region replacement unit is unnecessary after region segmentation, it is possible to achieve high-speed processing and a simple device configuration.

In addition, the computer is made to execute learning input step S21, learning extraction step S22, learning output step S23, and learning step S25. In learning input step S21, training data is inputted. In learning extraction step S22, a near-edge region is extracted from the training data. In learning output step S23, classification information for learning that does not include information indicating that the tissue in the extracted near-edge region is abnormal is generated from the training data. In learning step S25, neural network learning is performed by using the pathological image for learning and the classification information for learning. Note that, here, the processing system 400 in FIG. 24 executes the learning processing of steps S21 to S23 and S25.

According to the present embodiment, the processing system 400, which performs inference processing using a neural network, is capable of executing the learning processing of the neural network. For example, the processing system 400 may generate a model of a neural network without using an external learning system, or the processing system 400 may further learn a learned model generated by an external learning system.

In addition, in input step S11, a pathological image is newly inputted after learning step S25. In output step S13, classification information is generated from the newly inputted pathological image by processing using the learned model.

According to the present embodiment, classification information can be generated from a pathological image by using a learned model of the neural network which is learned by the processing system 400.

4. Fourth Embodiment

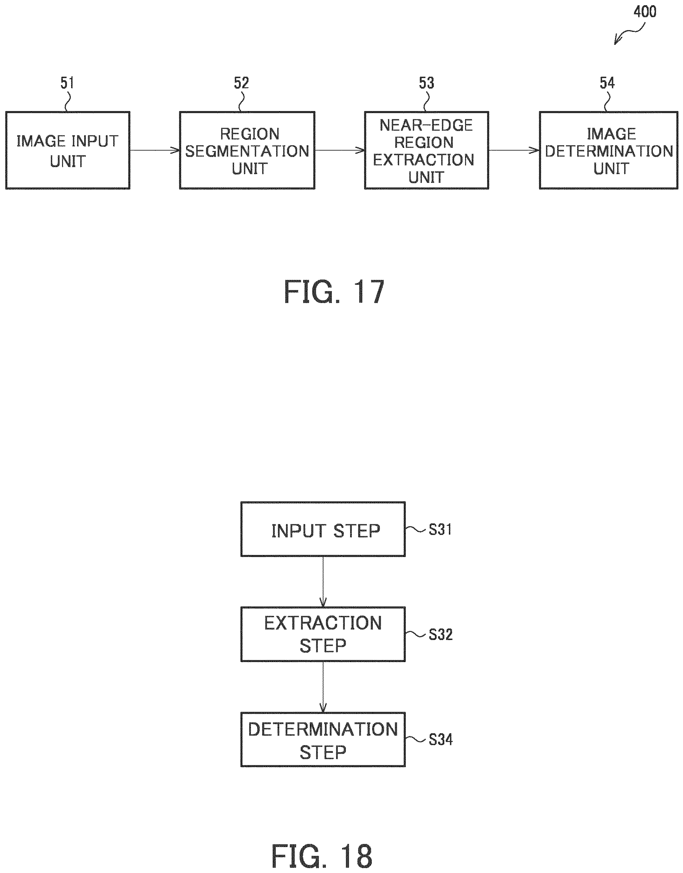

FIG. 17 shows a configuration example of a processing system 400 according to a fourth embodiment. The processing system 400 includes an image input unit 51, a region segmentation unit 52, a near-edge region extraction unit 53, and an image determination unit 54. Because the image input unit 51, the region segmentation unit 52, and the near-edge region extraction unit 53 are similar to the image input unit 11, the region segmentation unit 12, and the near-edge region extraction unit 132 according to the first embodiment, respectively, descriptions thereof will be omitted.

The image determination unit 54 receives inputs of a region-segmented image generated by the region segmentation unit 52 and information of the near-edge region extracted by the near-edge region extraction unit 53. That is, in the region-segmented image inputted to the image determination unit 54, the category of a near-edge region is not changed, and the category of an abnormal tissue region is sometimes included in the near-edge region. The image determination unit 54 regards the category of the near-edge region in the region-segmented image as the category of a normal tissue region, and conducts a search for whether or not the region-segmented image includes a pixel having the category of an abnormal tissue region. That is, even in a case where a pixel in the near-edge region of the region-segmented image have a category "1", the image determination unit 54 conducts a search by regarding the category of the pixel as "0". The image determination unit 54 determines that the pathological image is an abnormal image in a case where a predetermined number or more of pixels having the category "1" exist in the region-segmented image, and determines that the pathological image is a normal image in a case where the number of pixels having the category "1" is less than the predetermined number. The predetermined number is a threshold value for the determination, and is, for example, one, but may also be two or more.

FIG. 18 is a third flowchart of a processing procedure executed by the processing system 400. The processing system 400 that executes this processing procedure will be described subsequently using FIG. 22 and so forth. Note that input step S31 and extraction step S32 are similar to input step S1 and extraction step S2 in FIG. 10.

The program causes a computer to execute input step S31 and determination step S34. In input step S31, processing information obtained by processing a pathological image that includes tissue and non-tissue other than the tissue is inputted. In determination step S34, it is determined, based on the processing information, whether or not the pathological image includes cancer tissue. The processing information is information indicating whether or not the tissue in each local regions of the pathological image is abnormal. Here, it is assumed that the processing information includes information indicating that the tissue in the near-edge region constituted by the tissue at a distance from the non-tissue equal to or less than a threshold value is abnormal. In determination step S31, a determination is made without using the information, in the processing information, indicating that the tissue in the near-edge region is abnormal.

According to the present embodiment, even when the cell structure is broken or cells are deformed in the near-edge region of a tissue region, it is determined whether or not the pathological image includes cancer tissue without using the processing information in the near-edge region. Accordingly, it is possible to appropriately determine whether or not a pathological image is an abnormal image. For example, even for a pathological image in which an abnormality is likely to be overdetected in a near-edge region of the tissue region, it is possible to determine the normality/abnormality of the entire image highly accurately, based on the results of region segmentation. In addition, because the determination is made without using the input information of the near-edge region, the determination processing of the processing information of the near-edge region is omitted. Accordingly, high-speed processing and a simple device configuration can be achieved.

The program also causes the computer to execute an extraction step S32 of extracting a near-edge region from the processing information. In determination step S34, a determination is made based on the extracted near-edge region.

According to the present embodiment, because, in the extraction step S32, a near-edge region is extracted from the processing information, the near-edge region can be automatically extracted through data processing by a computer.

In addition, in determination step S34, a determination is made by regarding the tissue in the near-edge region as normal.

According to the present embodiment, even in a case where processing information indicating that the near-edge region is an abnormal tissue region is inputted in determination step S34, in the determination step S34, it is determined whether or not the pathological image includes cancer tissue by regarding the tissue in the near-edge region as normal. Accordingly, in determination step S34, it is possible to determine whether or not the pathological image includes cancer tissue without using the information of the near-edge region.

Note that, in the fourth embodiment, the region-segmented image generated by the region segmentation unit 52 corresponds to the processing information.

5. Fifth Embodiment

A processing system 400 according to a fifth embodiment is similar to the configuration example of the processing system 400 according to the fourth embodiment shown in FIG. 17. However, because the operation of the image determination unit 54 is different, same will be described hereinbelow.

The image determination unit 54 receives inputs of a region-segmented image generated by the region segmentation unit 52 and information of the near-edge region extracted by the near-edge region extraction unit 53. The image determination unit 54 does not read the category information of pixels in the near-edge region of the region-segmented image, but reads the category information of pixels other than those in the near-edge region, and determines, based on the category information thus read, whether or not the pathological image is an abnormal image. The determination method is similar to that of the fourth embodiment.

The flowchart of the processing procedure executed by the processing system 400 according to the fifth embodiment is similar to that in FIG. 18. However, the content of determination step S34 is different.

In determination step S34, the processing information of the regions other than the near-edge region is read and the determination is made, without reading the processing information of the near-edge region. The processing information is information indicating whether or not the tissue in each local regions of the pathological image is abnormal.

According to the present embodiment, even when the processing information indicating that the near-edge region is an abnormal tissue region is inputted in determination step S34, in the determination step S34, it is determined whether or not the pathological image includes cancer tissue based on the processing information of the regions other than the near-edge region, without reading the processing information of the near-edge region. Accordingly, in determination step S34, it is possible to determine whether or not the pathological image includes cancer tissue without using the information of the near-edge region.

6. Sixth Embodiment

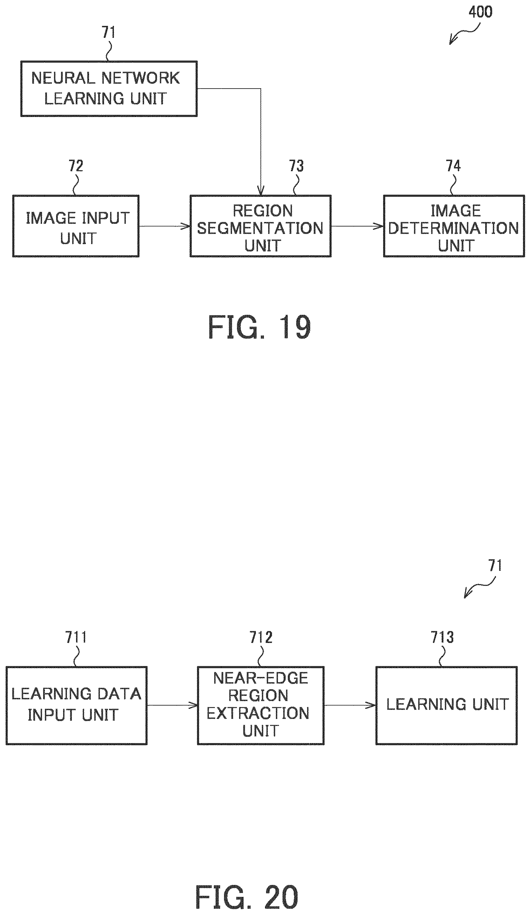

FIG. 19 shows a configuration example of a processing system 400 according to a sixth embodiment. The processing system 400 includes a neural network learning unit 71, an image input unit 72, a region segmentation unit 73, and an image determination unit 74. The image input unit 72, the region segmentation unit 73, and the image determination unit 74 are similar to the image input unit 32, the region segmentation unit 33, and the image determination unit 34 according to the third embodiment, respectively, and thus descriptions thereof will be omitted.

The neural network learning unit 71 causes the model of the neural network to learn, and the region segmentation unit 73 performs region segmentation by using the learned model. FIG. 20 shows a detailed configuration example of the neural network learning unit 71. The neural network learning unit 71 includes a learning data input unit 711, a near-edge region extraction unit 712, and a learning unit 713. The learning data input unit 711 and the near-edge region extraction unit 712 are similar to the learning data input unit 311 and the near-edge region extraction unit 312 according to the third embodiment, respectively, and thus descriptions thereof will be omitted.

A large number of sets of a pathological image, the corresponding labeled image, and the corresponding information of the near-edge region are inputted to the learning unit 713. That is, the labeled image of the training data is inputted to the learning unit 713 instead of the label classification information in which the category of the near-edge region is changed. In the sixth embodiment, a pathological image inputted to the learning unit 713 is referred to as a pathological image for learning, and a labeled image is referred to as classification information for learning. The learning unit 713 excludes, from the learning target, information on pixels in the near-edge region of the pathological image and the labeled image, and learns the model of the neural network by taking pixels other than those in the near-edge region as a learning target. Specifically, the learning unit 713 learns one pathological image and one labeled image by performing learning based on the category information of one pixel in the labeled image and the local region of the pathological image corresponding to the pixel, and executes the learning with respect to each pixel of the labeled image. At such time, the learning unit 713 executes the learning without using, in the learning, pixels in the near-edge region of the labeled image or the local regions of the pathological image corresponding to these pixels.

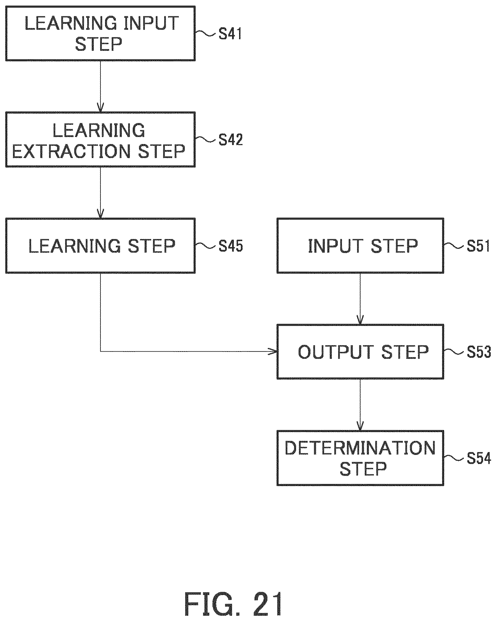

FIG. 21 is a fourth flowchart of a processing procedure executed by the processing system 400. The processing system 400 that executes this processing procedure will be described subsequently using FIGS. 23 and 24.

In input step S51, a pathological image is inputted as input information. In output step S53, processing is performed, using a learned model, on the tissue in the near-edge region such that the number of instances of an abnormal classification is smaller than when processing to classify the tissue in the near-edge region is performed according to the same predetermined criterion as the tissue other than that of the near-edge region. The learned model is a learned model of the neural network learned by second learning by using the pathological image for learning and the classification information for learning corresponding to the pathological image for learning. The second learning is learning using the classification information for learning that includes information indicating that the tissue in the near-edge region is abnormal, and is learning that performs learning without using information, in the classification information for learning, indicating that the tissue in the near-edge region is abnormal. Here, the learning processing of steps S41, S42, and S45 may be executed by the learning system 600 in FIG. 23 or may be executed by the processing system 400 in FIG. 24.

In determination step S54, it is determined, based on the input information, whether or not the pathological image includes cancer tissue. In determination step S54, a determination is made based on the result of processing using a learned model.

According to the present embodiment, the neural network is learned without using information, in the classification information for learning, indicating that the tissue in the near-edge region is abnormal. Even in a case where the cell structure is broken or cells are deformed in the near-edge region of a tissue region, it is possible to appropriately determine whether or not the pathological image is an abnormal image by making a determination based on the result of processing using a learned model. For example, even for a pathological image in which an abnormality is likely to be overdetected in a near-edge region of the tissue region, it is possible to determine the normality/abnormality of the entire image highly accurately, based on the results of region segmentation.

Further, the program causes the computer to execute learning input step S41, learning extraction step S42, and learning step S45. In the learning input step S41, training data is inputted. In the learning extraction step S42, a near-edge region is extracted from the training data. In learning step S45, the neural network learning is performed using the pathological image for learning and the classification information for learning, and, during the learning, the image for learning and the classification information for learning of the near-edge region are not used. Note that, here, the processing system 400 in FIG. 24 executes the learning processing of steps S41, S42, and S45.

According to the present embodiment, the processing system 400, which performs inference processing using a neural network, is capable of executing the learning processing of the neural network. For example, the processing system 400 may generate a model of a neural network without using an external learning system, or the processing system 400 may further learn a learned model generated by an external learning system.

In addition, in input step S51, a pathological image is newly inputted after learning step S45. In output step S53, classification information is generated from the newly inputted pathological image by processing using the learned model.

According to the present embodiment, classification information can be generated from a pathological image by using a learned model of the neural network which is learned by the processing system 400.

Note that, although an example was described hereinabove in which learning is performed without using the classification information of the near-edge region in the classification information thus read, learning may be performed as follows. For example, the learning may be performed by regarding the category of the near-edge region in the read classification information as normal. Alternatively, the learning may be performed without reading the classification information of the near-edge region in the classification information.

Note that, in the determination step, the determination may be made based on the result of processing using a learned model. A case where the output step is realized by a learned model as per the sixth embodiment is an example, and, as another embodiment, the determination step may be realized by a learned model. In an embodiment in which the determination step is realized by a learned model, the output step of the sixth embodiment is omitted, the pathological image is inputted in the determination step, and, in the determination step, it is determined, using the learned model, whether or not the inputted pathological image includes cancer tissue. The learned model in this case is learned using the determination result corresponding to the pathological image for learning and the classification information for learning. The determination result is generated from the classification information for learning by using a method similar to that generated from the result of the region segmentation in the determination step of the sixth embodiment.

7. Hardware Configuration Example

FIG. 22 shows a hardware configuration example of a processing system 400 and a photographic system 800 for capturing pathological images. Note that, when the processing system 400 performs processing on a pathological image 421, it is not necessary to connect the processing system 400 and the photographic system 800.

The photographic system 800 includes an image enlargement device 830, an imaging device 850, a control device 840, and a storage device 820. Here, the image enlargement device 830 enlarges a subject image. An example of the photographic system 800 is a whole slide imaging (WSI) system or a slide scanner. Further, in the photographic system 800, the image enlargement device 830 can be configured as an optical microscope. However, the photographic system 800 may be any system capable of capturing a pathological image, and is not limited to the configuration of FIG. 22.

The image enlargement device 830 enlarges a tissue section placed on a glass slide, and the imaging device 850 captures an image of the enlarged tissue section. The region photographed in one shot is a portion of the tissue section. The control device 840 controls the image enlargement device 830 and the imaging device 850 so as to photograph a plurality of photographic regions covering the entire glass slide while moving the glass slide to change the photographic region. The control device 840 generates one pathological image by pasting the plurality of photographed regions, and stores the pathological image in the storage device 820. The storage device 820 stores a plurality of pathological images 821 obtained from a plurality of glass slides.

The control device 840 includes, for example, a movement mechanism for moving a glass slide, and a processor. The processor controls the movement mechanism, the image enlargement device 830, and the imaging device 850. The processor is, for example, a CPU, an MPU, a GPU, an FPGA, or the like. The storage device 820 is, for example, a semiconductor memory such as a nonvolatile memory, a magnetic storage device such as a hard disk drive, or an optical storage device such as an optical disk drive.

The processing system 400 includes a processor 410 and a storage device 420. The processing system 400 is, for example, an information processing device such as a PC or a server. Alternatively, the processing system 400 may be a cloud system in which a plurality of information processing devices are connected via a network.

The pathological image 821 stored in the storage device 820 of the photographic system 800 is transferred to the processing system 400 and stored in the storage device 420 as the pathological image 421. In addition, a program 922 stored on the information storage medium 900 is read by the processing system 400 and stored in the storage device 420 as a program 422. The functions of each part, or the steps of the processing procedures, of the processing system 400 described in the first to sixth embodiments are scripted in the programs 922 and 422. Because the processor 410 reads the program 422 from the storage device 420 and executes the program 422, the processor 410 realizes the functions of each part, or the steps of the processing procedures, of the processing system 400 described in the first to sixth embodiments.

The processor 410 is, for example, a CPU, an MPU, a GPU, an FPGA, or the like. The storage device 420 is, for example, a semiconductor memory such as a nonvolatile memory, a magnetic storage device such as a hard disk drive, or an optical storage device such as an optical disk drive. In addition, the storage device 420 includes a volatile memory such as a RAM and functions as the working memory of the processor 410. For example, the storage device 420 temporarily stores region-segmented images, a heat map, classification information, and the like generated by the processor 410. The information storage medium 900 is a computer-readable storage medium and is a non-transitory storage medium. The information storage medium can be realized by, for example, an optical disk, a hard disk drive, a nonvolatile semiconductor memory, or the like.

FIG. 23 shows a hardware configuration example of a processing system 400 and a learning system 600 in a case where a neural network is to be learned outside the processing system 400. When the processing system 400 performs processing on the pathological image 421, it is not necessary to connect the processing system 400 and the learning system 600. Note that descriptions of the constituent elements illustrated in FIG. 22 will be omitted.

The learning system 600 includes a processor 610 and a storage device 620. The learning system 600 is, for example, an information processing device such as a PC or a server. Alternatively, the learning system 600 may be a cloud system in which a plurality of information processing devices are connected via a network.

The storage device 620 stores a neural network model 623 and training data 625. The training data 625 includes a plurality of data sets, and each data set is a pathological image and a labeled image. The processor 610 reads the model 623 and the training data 625 from the storage device 620, and uses the training data 625 to learn the model 623. The learned model 623 is referred to as a learned model 423. The learned model 423 is transferred from the learning system 600 to the processing system 400 and stored in the storage device 420 of the processing system 400. The processor 410 of the processing system 400 reads the program 422 incorporating the learned model 423 and executes the program 422 incorporating the learned model 423, thereby realizing the functions of each part, or the steps of the processing procedures, of the processing system 400 described in the third to sixth embodiments. Note that, in FIG. 23, the learned model 423 is incorporated into the program 422 and stored in the storage device 420, but the learned model 423 and the program 422 may be stored separately in the storage device 420.

FIG. 24 illustrates a hardware configuration example of the processing system 400 in a case where the neural network is learned inside the processing system 400. The configuration in FIG. 24 can be combined with any of the configurations of FIGS. 22 and 23. Note that descriptions of the constituent elements illustrated in FIG. 22 or FIG. 23 will be omitted.

The storage device 620 stores a program 422 incorporating the learned model 423 of the neural network, and training data 425. The training data 425 includes a plurality of data sets, and each data set is a pathological image and a labeled image. The processor 410 reads the program 422 and the training data 425 from the storage device 420, and updates the learned model 423 by using the training data 425 to further learn the learned model 423. The processor 410 reads the program 422 incorporating the updated learned model 423 from the storage device 420 and executes the program 422 incorporating the learned model 423, thereby realizing the functions of each part, or the steps of the processing procedures, of the processing system 400 described in the third to sixth embodiments. Note that, in FIG. 24, the learned model 423 is incorporated into the program 422 and stored in the storage device 420, but the learned model 423 and the program 422 may be stored separately in the storage device 420.

Although the present embodiment and modifications thereof have been described hereinabove, the present disclosure is not limited to the respective embodiments and the modifications thereof as is, rather, the constituent elements can, at the implementation stage, be modified and embodied without departing from the spirit of the present disclosure. Further, a plurality of constituent elements disclosed in the foregoing embodiments and modifications can, as appropriate, be combined. For example, some constituent elements may be eliminated from all the constituent elements described in each embodiment and modification. Furthermore, the constituent elements described in different embodiments and modifications may, as appropriate, be combined. Thus, various modifications and applications can be made without departing from the spirit of the present disclosure. Furthermore, throughout the specification or the drawings, a term described at least once in the specification or the drawings together with a different term having a broader meaning or the same meaning can be replaced with the different term.

REFERENCE SIGN

11 image input unit, 12 region segmentation unit, 13 region replacement unit, 14 image determination unit, 21 image input unit, 22 probability distribution estimation unit, 23 probability distribution replacement unit, 24 image determination unit, 31 neural network learning unit,32 image input unit, 33 region segmentation unit, 34 image determination unit, 51 image input unit, 52 region segmentation unit, 53 near-edge region extraction unit, 54 image determination unit, 71 neural network learning unit, 72 image input unit, 73 region segmentation unit, 74 image determination unit, 131 region-segmented image input unit , 132 near-edge region extraction unit, 133 classification information generation unit, 231 heat map input unit, 232 near-edge region extraction unit, 233 classification information generation unit, 311 learning data input unit , 312 near-edge region extraction unit, 313 label classification information generation unit, 314 learning unit, 400 processing system, 410 processor, 420 storage device, 421 pathological image, 422 program, 423 learned model, 425 training data, 600 learning system, 610 processor, 620 storage device, 623 model, 625 training data, 711 learning data input unit, 712 near-edge region extraction unit, 713 learning unit, 800 photographic system, 820 storage device, 821athological image 830 image enlargement device, 840 control device, 850 imaging device, 900 information storage medium, 922 program, ABG non-tissue background region, AKD cavity region, ATS tissue region, ATSa normal tissue region, ATSb abnormal tissue region, HKA near-edge region,HMP heat map, IMG pathological image, LBI region-segmented image, LNLBI labeled image, MPH heat map, S1,S11,S31,S51 input step, S2,S32 extraction step, S21,S41 learning input step, S22,S42 learning extraction step, S23 learning output step, S25,S45 learning step, S3,S13,S53 output step, S4,S14,S34,S54 determination step

**Claims**

1.  A program that causes a computer to execute:

    an input step of inputting input information which is a pathological image that includes tissue and non-tissue other than the tissue or which is processing information obtained by processing the pathological image; and
    an output step of outputting, based on the input information, classification information indicating whether or not the tissue in each local region of the pathological image is abnormal,
    wherein, in the output step, second processing is performed in which, for the tissue in a near-edge region constituted by the tissue at a distance from the non-tissue equal to or less than a threshold value, the number of instances of an abnormal classification is smaller than when first processing to classify the tissue in the near-edge region is performed according to the same predetermined criterion as the tissue other than the tissue in the near-edge region, and the classification information is outputted.

2.  The program according to claim 1,
    the program further causes the computer to execute an extraction step of:

    extracting the near-edge region from the input information,
    wherein, in the output step, the second processing is performed based on the extracted near-edge region.

3.  The program according to claim 2,
    wherein the second processing includes processing to classify the tissue in the near-edge region as not abnormal.

4.  The program according to claim 3,

    Wherein, in the input step, the processing information is inputted as the input information,
    the processing information indicates whether or not the tissue in each local region of the pathological image is abnormal and includes information indicating that the tissue in the near-edge region is abnormal, and,
    in the output step, the classification information is generated by correcting information, in the processing information, indicating whether or not the tissue in the near-edge region is abnormal.

5. The program according to claim 3,
wherein, in the output step, the classification information is generated, which includes only information indicating that the tissue in the near-edge region is normal, or the classification information is generated, which includes information not indicating that the tissue in the near-edge region is normal or abnormal.

6. The program according to claim 2,

wherein, in the input step, the processing information is inputted as the input information,
the processing information is information of a spatial distribution of probabilities constituted by probability values indicating a degree of abnormality of the tissue in each local region of the pathological image, and
the second processing includes processing to perform modulation by lowering the probability values of the near-edge region in the processing information.

7. The program according to claim 6,
wherein the second processing includes processing to perform modulation by lowering the probability values of the local regions as the local regions have increased proximity to the non-tissue in the near-edge region.

8. The program according to claim 1,
wherein, in the output step, the second processing is not performed on the near-edge region constituted by the tissue at a distance from a cavity region, which is a region of the non-tissue surrounded by the tissue, equal to or less than the threshold value.

9. The program according to claim 1,
the program further causes the computer to execute the determination step of:
determining whether or not the pathological image contains cancer tissue by using the outputted classification information.

10. The program according to claim 1,

wherein, in the input step, the pathological image is inputted as the input information,
in the output step, the second processing is performed by using a learned model,
the learned model is a learned model of a neural network learned by first learning or second learning by using a pathological image for learning and classification information for learning corresponding to the pathological image for learning,
the first learning is learning using the classification information for learning that does not include information indicating that the tissue in the near-edge region is abnormal, and
the second learning is learning using the classification information for learning that includes information indicating that the tissue in the near-edge region is abnormal, and is learning that performs learning without using information, in the classification information for learning, indicating that the tissue in the near-edge region is abnormal.

11. The program according to claim 10,

wherein the learned model is a learned model learned in the first learning, and
the program further causes the computer to execute:

a learning input step of inputting training data;
a learning extraction step of extracting the near-edge region from the training data;
a learning output step of generating, from the training data, the classification information for learning that does not include information indicating that the tissue in the extracted near-edge region is abnormal; and
a learning step of performing the neural network learning by using the pathological image for learning and the classification information for learning.

12. A program that causes a computer to execute:

an input step of inputting processing information obtained by processing a pathological image that includes tissue and non-tissue other than the tissue; and

a determination step of determining, based on the processing information, whether or not the pathological image includes cancer tissue,

wherein the processing information is information indicating whether or not the tissue in each local region of the pathological image is abnormal and includes information indicating that the tissue in a near-edge region constituted by the tissue at a distance from the non-tissue equal to or less than a threshold value is abnormal, and, in the determination step, the determination is made without using information, in the processing information, indicating that the tissue in the near-edge region is abnormal.

13. The program according to claim 12,
the program further causes the computer to execute:

an extraction step of extracting the near-edge region from the processing information,
wherein, in the determination step, the determination is made based on the extracted near-edge region.

14. The program according to claim 12,
wherein, in the determination step, the determination is made by regarding the tissue in the near-edge region as normal.

15. The program according to claim 12,
wherein, in the determination step, the processing information of regions other than the near-edge region is read and the determination is made, without reading the processing information of the near-edge region.

16. A program that causes a computer to execute:

an input step of inputting a pathological image that includes tissue and non-tissue other than the tissue; and
a determination step of determining whether or not the pathological image includes cancer tissue,
wherein, in the determination step, the determination is made based on a result of processing using a learned model,
the learned model is a learned model of a neural network learned by first learning or second learning by using a pathological image for learning and classification information for learning corresponding to the pathological image for learning,
the first learning is learning using the classification information for learning that does not include information indicating that the tissue in a near-edge region constituted by the tissue at a distance from the non-tissue equal to or less than a threshold value is abnormal, and
the second learning is learning using the classification information for learning that includes information indicating that the tissue in the near-edge region is abnormal, and is learning including processing that does not use information, in the classification information for learning, indicating that the tissue in the near-edge region is abnormal.

17. The program according to claim 16,
the program further causes the computer to execute:

an output step of generating, from the pathological image, classification information indicating whether or not the tissue in each local region of the pathological image is abnormal, by processing using the learned model,
wherein, in the determination step, the determination is made based on the classification information.

18. A neural network learning program causing a computer to execute:

a learning input step of inputting a pathological image for learning including tissue and non-tissue other than the tissue and classification information for learning corresponding to the pathological image for learning; and
a learning step of learning, by first learning or second learning, a model of a neural network that generates classification information indicating whether or not the tissue in each local region of the pathological image for learning is abnormal,
wherein, in a case where the learning is learning by the first learning,
the first learning is learning using the classification information for learning that does not include information indicating that the tissue in a near-edge region constituted by the tissue at a distance from the non-tissue equal to or less than a threshold value is abnormal,
in the learning input step, training data is inputted, and

the program further causes the computer to execute:

a learning extraction step of extracting the near-edge region; and
a learning output step of generating, from the training data, the classification information for learning that does not include information indicating that the tissue in the extracted near-edge region is abnormal,
or,
in a case where, in the learning step, learning is by the second learning,
the second learning is learning using the classification information for learning that includes information indicating that the tissue in the near-edge region is abnormal, and
in the learning step, learning is performed without using information, in the classification information for learning, indicating that the tissue in the near-edge region is abnormal.

19. An information storage medium storing the program according to claims 1, 12, 16 or 18.

20. A processing system, comprising: a processor that executes the program according to claims 1, 12, 16 or 18.

IMG

ATS

ABG

# FIG. 1

400

| IMAGE INPUT UNIT | IMG | REGION SEGMENTATION UNIT | LBI | REGION REPLACEMENT UNIT | LBI' | IMAGE DETERMINATION UNIT |

11 — IMAGE INPUT UNIT → IMG → 12 — REGION SEGMENTATION UNIT → LBI → 13 — REGION REPLACEMENT UNIT → LBI' → 14 — IMAGE DETERMINATION UNIT

# FIG. 2

LBI

ATSa "0"

ATSb "1"

ABG "2"

## FIG. 3

LNLBI

ATSb "1"

ATSa "0"

ABG "2"

## FIG. 4

FIG. 5

LBI

⬚ NORMAL TISSUE REGION ATSa

⬚ ABNORMAL TISSUE REGION ATSb

⬚ BACKGROUND REGION ABG

# FIG. 6

LBI

NEAR-EDGE REGION HKA OF
TISSUE REGION ATS

TISSUE REGION ATS

BACKGROUND REGION ABG

FIG. 7

LBI'

NORMAL TISSUE REGION ATSa

ABNORMAL TISSUE REGION ATSb

BACKGROUND REGION ABG

FIG. 8

IMG

AKD

ATS

ABG

# FIG. 9

INPUT STEP — S1

EXTRACTION STEP — S2

OUTPUT STEP — S3

DETERMINATION STEP — S4

# FIG. 10

400

| 21 | | 22 | | 23 | | 24 |
|---|---|---|---|---|---|---|
| IMAGE INPUT UNIT | IMG | PROBABILITY DISTRIBUTION ESTIMATION UNIT | MPH | PROBABILITY DISTRIBUTION REPLACEMENT UNIT | MPH' | IMAGE DETERMINATION UNIT |

# FIG. 11

23

| 231 | | 232 | | 233 | |
|---|---|---|---|---|---|
| HEAT MAP INPUT UNIT | MPH | NEAR-EDGE REGION EXTRACTION UNIT | MPH / HKA | CLASSIFICATION INFORMATION GENERATION UNIT | MPH' |

# FIG. 12

REGION

NEAR-EDGE REGION HKA

MPH

HEAT MAP

| 0.2 | 0.3 | 0.1 | 0.0 | 0.0 |
| 0.2 | 0.3 | 0.6 | 0.6 | 0.1 |
| 0.2 | 0.2 | 0.6 | 0.6 | 0.3 |
| 0.2 | 0.2 | 0.6 | 0.6 | 0.4 |
| 0.2 | 0.3 | 0.3 | 0.4 | 0.4 |

MPH'

MODULATED HEAT MAP

| 0.10 | 0.08 | 0.1 | 0.0 | 0.0 |
| 0.12 | 0.11 | 0.16 | 0.16 | 0.1 |
| 0.15 | 0.12 | 0.31 | 0.22 | 0.08 |
| 0.2 | 0.2 | 0.44 | 0.35 | 0.21 |
| 0.2 | 0.3 | 0.3 | 0.4 | 0.4 |

FIG. 13

EP 4 209 991 A1

```
        31
    ┌─────────────────┐
    │ NEURAL NETWORK  │
    │  LEARNING UNIT  │
    └─────────────────┘
```

```
      32                    33                    34
┌─────────────┐     ┌─────────────┐     ┌─────────────┐
│ IMAGE INPUT │────▶│   REGION    │────▶│    IMAGE    │
│    UNIT     │     │ SEGMENTATION│     │DETERMINATION│
│             │     │    UNIT     │     │    UNIT     │
└─────────────┘     └─────────────┘     └─────────────┘
```

400

# FIG. 14

```
       311                 312                 313                 314
┌──────────────┐   ┌──────────────┐   ┌──────────────┐   ┌──────────────┐
│              │   │  NEAR-EDGE   │   │    LABEL     │   │              │
│LEARNING DATA │──▶│   REGION     │──▶│CLASSIFICATION│──▶│LEARNING UNIT │
│  INPUT UNIT  │   │  EXTRACTION  │   │ INFORMATION  │   │              │
│              │   │    UNIT      │   │  GENERATION  │   │              │
│              │   │              │   │     UNIT     │   │              │
└──────────────┘   └──────────────┘   └──────────────┘   └──────────────┘
```

31

# FIG. 15

LEARNING
INPUT STEP ～S21

LEARNING
EXTRACTION STEP ～S22

LEARNING
OUTPUT STEP ～S23

LEARNING STEP ～S25

INPUT STEP ～S11

OUTPUT STEP ～S13

DETERMINATION
STEP ～S14

FIG. 16

51
IMAGE INPUT UNIT

52
REGION SEGMENTATION UNIT

53
NEAR-EDGE REGION EXTRACTION UNIT

54
IMAGE DETERMINATION UNIT

400

FIG. 17

INPUT STEP — S31

EXTRACTION STEP — S32

DETERMINATION STEP — S34

FIG. 18

71

NEURAL NETWORK
LEARNING UNIT

400

72

IMAGE INPUT
UNIT

73

REGION
SEGMENTATION
UNIT

74

IMAGE
DETERMINATION
UNIT

## FIG. 19

71

711

LEARNING DATA
INPUT UNIT

712

NEAR-EDGE
REGION
EXTRACTION
UNIT

713

LEARNING UNIT

## FIG. 20

FIG. 21

FIG. 22

400

PROCESSING SYSTEM

PROCESSOR —410

420

STORAGE DEVICE

PATHOLOGICAL IMAGE —421

422

PROGRAM

423

LEARNED MODEL

600

LEARNING SYSTEM

PROCESSOR —610

620

STORAGE DEVICE

623

MODEL

625

TRAINING DATA

FIG. 23

400

PROCESSING SYSTEM

PROCESSOR ~410

420

STORAGE DEVICE

PATHOLOGICAL IMAGE ~421

422

PROGRAM

423

LEARNED MODEL

TRAINING DATA ~425

FIG. 24

## INTERNATIONAL SEARCH REPORT

| International application No. |
| --- |
| PCT/JP2020/033222 |

A. CLASSIFICATION OF SUBJECT MATTER
Int. Cl. G06T7/00(2017.01)i, G01N33/48(2006.01)i
FI: G01N33/48 P, G06T7/00 630, G01N33/48 M

According to International Patent Classification (IPC) or to both national classification and IPC

B. FIELDS SEARCHED

Minimum documentation searched (classification system followed by classification symbols)
Int. Cl. G06T1/00, G06T7/00, G01N33/48

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2020/026341 A1 (OLYMPUS CORP.) 06 February 2020, claims, fig. 1-13 | 1-20 |
| A | JP 2019-148473 A (SYSMEX CORP.) 05 September 2019, claims, fig. 1-21 | 1-20 |
| A | JP 2018-185265 A (NEC CORP.) 22 November 2018, claims, fig. 1-12 | 1-20 |
| A | JP 2000-331143 A (MITSUBISHI ELECTRIC CORP.) 30 November 2000, claims, fig. 1-17 | 1-20 |
| A | JP 07-088106 A (TOSHIBA CORP.) 04 April 1995, claims, fig. 1-31 | 1-20 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19.10.2020 | 02.11.2020 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

| | | International application No. |
|---|---|---|
| | | PCT/JP2020/033222 |

| Patent Documents referred to in the Report | Publication Date | Patent Family | Publication Date |
|---|---|---|---|
| WO 2020/026341 A1 | 06.02.2020 | (Family: none) | |
| JP 2019-148473 A | 05.09.2019 | (Family: none) | |
| JP 2018-185265 A | 22.11.2018 | (Family: none) | |
| JP 2000-331143 A | 30.11.2000 | (Family: none) | |
| JP 07-088106 A | 04.04.1995 | US 5680471 A claims, figures | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Technical Report,* 25 May 2017, vol. 117 (48), 1-6

- SEMANTIC IMAGE SEGMENTATION WITH DEEP CONVOLUTIONAL NETS AND FULLY CONNECTED CRFS. *arXiv:1412.7062v4 [cs.CV,* 07 June 2016